# EUROPEAN PATENT APPLICATION

(11) **EP 0 899 309 A1**
(43) Date of publication of application: **03.03.1999**
(21) Application number: 98660082.3
(22) Date of filing: 25.08.1998
(51) Int. Cl.: C09D 5/02, B65D 83/14

(54) **Marking paint and a distribution packing for it that uses a small pressure can**

(30) Priority: 26.08.1997 FI 973491
(71) Applicant: Kuivala, Risto, 41900 Petäjävest (FI)
(72) Inventor: Kuivala, Risto, 41900 Petäjävest (FI)
(74) Representative: Helke, Kimmo Kalervo

(57) **Abstract**

The invention relates to a marking paint meant to be packed into a small pressure can (1) and to be sprayed with the help of a propellant (8), and to a distribution packing for it. The marking paint consists of a mixture of water, polymer and a colour pigment belonging to the AZO-group which is of foodstuff quality and is dispersible in water.

## Description

The invention relates especially to a marking paint intended to be packed into a small pressure can and to be sprayed with the help of a propellant, which marking paint consists of a mixture of the carrying liquid, the colour pigment and possible additives. The invention also relates to a distribution packing developed for the marking paint in which a small pressure can is used to spray the paint.

Marking colours are especially used in the wood processing industry to make several kinds of markings. Both products and packagings are marked by them. A colour marking is used e.g. to mark the shift, the quality or some separate quantity, e.g. thickness. The marking colours are special marking paints and they are typically used in the plywood and timber industries. Normal spray paints that are on the market could be used in the past. Due to the tightening of environmental regulations this is no longer possible, because all the spray paints on the market are poisonous and normally inflammable. Present regulations also require the propellant to be non-inflammable and non-poisonous. The marking paint must further stay inert when the temperature rises to 100°C. A vast number of non-poisonous colours is naturally known, but none of the known colour mixtures that fulfill the criteria laid out above is suitable as a spray paint. Most often such a known colour mixture either blocks the nozzle or is unsuitable for spraying. Certain marking colours quickly use up the nozzle so that it becomes unusable.

US patent publication 5,536,762 presents some colour compositions in which water soluble AZO-colours are used. In order to enhance the weather resistance, the solution includes an acrylic polymer. The sprayable colouring agent is easily produced by using the water soluble colouring agent, but its UV-light resistance and colour saturation are low. Dispersible colour pigments are instead known, which are good in relation to the above characteristics, but it has been impossible to use them in sprayable paints, because the colour particles block the nozzle.

The object of the invention is to provide a new kind of marking paint and a distribution packing that uses a small pressure can, without the abovementioned disadvantages. The characteristic features of the invention are presented in the accompanying patent claims. A very fine colour pigment, a dispersible AZO-colour which and is of foodstuff quality, is together with polymer suitable as a spray paint.

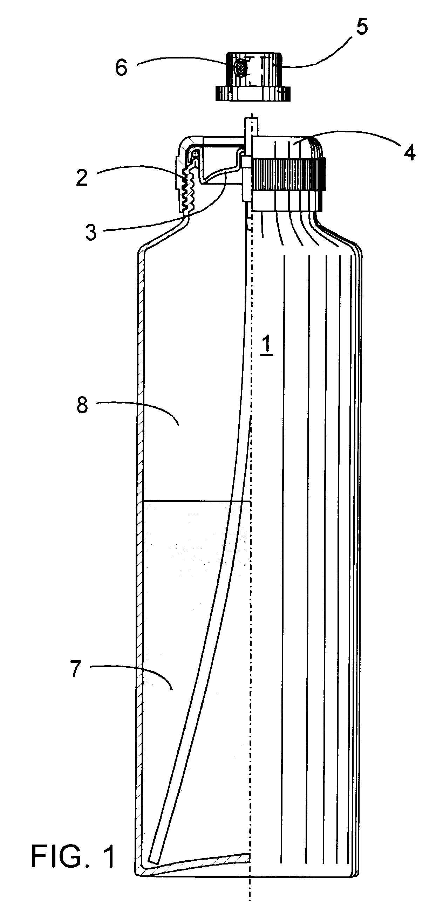

In the following, the invention is described with the help of an example and the accompanying figure, in which a small pressure can containing marking paint in accordance with the invention is presented. A marking paint in accordance with the invention includes the following components.

| | | |
|---|---|---|
| Water | 84-90% | |
| Colour pigment | 3-8% | Basf Ltd (Basf AG, DE) / Dispers rot 38-5507 (Red, the other colours from the same series) |
| Polymer | 5-10% | Basf Ltd/ Collacral PU85 |
| Evaporation preventer | 1% | Polymex Ltd (FI) / Eko-55 dissolvent |

Colour pigments do originally not dissolve in water, but when they are very fine, they are dispersible in water. Polymer is a polyurethane-based dispersion.

A small pressure can 1, the size of which is 400 ml, is used as the distribution packing. It has a neck 2 provided with a screw, onto which a changeable, disposable nozzle part 3 can be attached with the help of a special threaded cap 4. The nozzle part 5 itself is detachable. The size of the nozzle 6 is 0,15 mm (normative value 0,1-0,2 mm, preferably at 0,14-0,17).

2 dl of the colour mixture 7 are placed at the bottom of the can, after which valve nozzle 3 which functions as a cap is attached with the help of threaded cap 4 which is locked with glue. The small pressure can 1 is pressurised, preferably, with air (the air part is marked with reference number 8) through valve part 3 (nozzle part 5 taken apart) to 8 bars (6-15 bar). The propellant may also be another non-poisonous gas, eg. nitrogen. Carbondioxide requires the use of a liquid bag inside the can, known per se, in order to avoid the propelant dissolving in liquid.

The colour mixture is made according to the following. First the polymer is mixed with water. In the batch that was used as an example, a 27-litre container was used, on the bottom of which 7,3% (volume percentages) polymer was poured, and which was then filled with water almost to the top. The mixture was allowed to stand for 24 hours, after which the colour pigment was added and mixed. The amount used is 3-8 volume-%, depending on the colour and the strength desired. Finally about 3 dl of the evaporation prevention agent, the abovementioned Eko-55, were put into the abovementioned container. An alternative to the latter is an anti-freezing agent (e.g. methoxpropylacetate), 0,4 - 3 volume-% of the mixture, which also makes possible the outdoor use of the colour in cold circumstances.

The polymer changes the surface tension of the water, whereby the thickness of the liquid that comes out from the nozzle can be set. With the help of this, the width of the spray is set as desired. Without the polymer, the spray would spread into a fog. The polymer also improves the light resistance of the colour, because the colour will not be absorbed too deep. Profitably both the colour pigment and the polymer are biologically dissoluble.

The AZO-colour of foodstuff quality is fine enough to be used as described here, so that it will not block the nozzle. The specific weight of the colour pigment must be in the range of the specific weight of water (90-110%). AZO-colours make up their own chemical group of agents. The criteria of foodstuff quality have been accurately set in international standards. Until now, no other useful colour pigments have been found except the dispersible colouring agents of the abovementioned AZO-group. It may be that a corresponding fine and non-poisonous colour pigment, dispersible in water, will be found, to which there also exists a suitable polymer.

## Claims

1. Marking paint intended to be packed especially into a small pressure can (1) and to be sprayed with the help of a propellant, which marking paint consists of a mixture of the carrying liquid, a colour pigment from the AZO-group and possible additives, characterized in that the carrying liquid is water, the AZO-colour pigment is of foodstuff quality and dispersible in water, and in that one additive is a polymer which has been fitted to the colour pigment, by which the surface tension of the colour mixture is set to correspond to a spray of desired width, whereby air can be used as the propellant (8) and whereby a completely non-inflammable and non-poisonous sprayable marking paint can be produced.

2. Marking paint according to patent claim 1, characterized in that the specific weight of the colouring agent is 90-110% of the specific weight of water.

3. Marking paint according to patent claim 1 or 2, characterized in that both the colouring agent and the polymer are biologically dissoluble.

4. Marking paint according to one of patent claims 1 - 3, characterized in that it also includes an environmentally friendly evaporation prevention agent, 0,4 - 2 volume-% of the amount of the mixture in order to prevent the drying of the nozzle.

5. Marking paint according to one of patent claims 1 - 4, characterized in that the share of the colour pigment is 3 - 8 volume-% and the share of the polymer is 5 - 10 volume-%.

6. Marking paint according to one of patent claims 1 - 5, characterized in that the polymer is a polyurethane-based dispersion.

7. Distribution packing for the marking paint that uses a small pressure can (1), which packing includes a press button valve and a distribution nozzle (3, 5) as a spraying device and in which the marking paint consists of a mixture of the carrying liquid, the colour pigment belonging to the AZO-group and possible additives, characterized in that the carrying liquid is water, the propellant is non-poisonous gas, the AZO-colour pigment is of foodstuff quality and dispersible in water and one of the additives is a polymer fitted to the colour pigment in order to set the surface tension of the colour mixture according to the desired width of the spray.

8. Marking paint packing according to patent claim 7, characterized in that the small pressure can (1) is of a recyclable model and has a distribution nozzle (3, 5) which has been set to be changeable.

9. Marking paint packing according to patent claim 8, characterized in that the disposable distribution nozzle (3, 5) has been set to be attached to the small pressure 5 can (1) with a threaded cap (4) which is locked by glue.

10. Marking paint packing according to patent claim 8 or 9, characterized in that the size of the nozzle (6) is 0,1 - 0,2 mm, preferably 0,14 - 0,17 mm.
